Europäisches Patentamt

(19) European Patent Office

Office européen des brevets

(11) Publication number: **0 074 190**
**A2**

(12) # EUROPEAN PATENT APPLICATION

(21) Application number: 82304289.0

(22) Date of filing: 13.08.82

(51) Int. Cl.³: **G 01 D 9/40**
**G 01 D 15/24**

(30) Priority: 25.08.81 GB 8125870

(43) Date of publication of application:
16.03.83 Bulletin 83/11

(84) Designated Contracting States:
AT BE CH DE FR GB IT LI LU NL SE

(71) Applicant: Bryans Southern Instruments Ltd.
1 Willow Lane
Mitcham Surrey CR4 4UL(GB)

(72) Inventor: Brash, Robert Alan David
"Hawkshaw" Eastbourne Road
Blindley Heath Lingfield Surrey(GB)

(74) Representative: Fentiman, Denis Richard et al,
Elkington and Fife High Holborn House 52/54 High
Holborn
London WC1V 6SH(GB)

(54) Writing device for plotting and recording apparatus.

(57) A recording or plotting apparatus has a pen (2) which is movable on a record surface and which is supported on a penholder or carriage (1). Two portions of cable (3) are connected to the penholder or carriage (1) and the lengths of these cable portions can be varied by a driving means (7) in order to move the penholder or carriage on the record surface. The cable portions are maintained under tension.

Fig.1

- 1 -

Title:   Writing Device for Plotting and Recording
         Apparatus

This invention relates to writing devices for plotting
and recording apparatus.

In a well known type of plotting or recording
apparatus, a pen is moved across a record surface such as
a sheet of paper or a record card to make a plot or record
on the record surface.  The pen is mounted on a penholder
or carriage which in conventional constructions is
carried by a gantry which enables the pen to be moved
across and in contact with the record surface.  The
gantry is usually movable from side to side of the record
surface and the pen is carried in a penholder which is
moved along the gantry in a direction perpendicular to
the direction of movement of the gantry.  The movement
of the gantry and the penholder are controlled by commands
emanating from a data input, for example a computer.

An object of the present invention is to provide a
plotting or recording device in which a pen may be moved
on a record surface without the aid of a gantry.

Accordingly, the present invention provides a
recording or plotting apparatus comprising a penholder or
carriage supporting a pen which is movable on a record
surface; two portions of cable connected to the penholder
or carriage; driving means for varying the lengths of the
cable portions thereby to move the penholder or carriage
on the record surface; and means for maintaining the cable
portions under tension.  The term "cable" as used herein
includes wire or wires, cord, chain or the like.  The
cable portions may be portions of a guide wire passed
around pulleys to provide a figure-eight configuration,
one of the said pulleys being arranged on the penholder
at or near the point of intersection of the figure-eight

- 2 -

and other portions of the figure-eight being anchored to the penholder or carriage at or near the point of intersection.

The driving means is preferably a pair of non-slip drive scrolls, each driven by an electric stepper motor controlled by impulses from a computer. With this arrangement, it is possible to move the pen carried by the penholder or carriage to any position within the writing area.

Embodiments of the present invention will now be described by way of example with reference to the accompanying drawing in which:

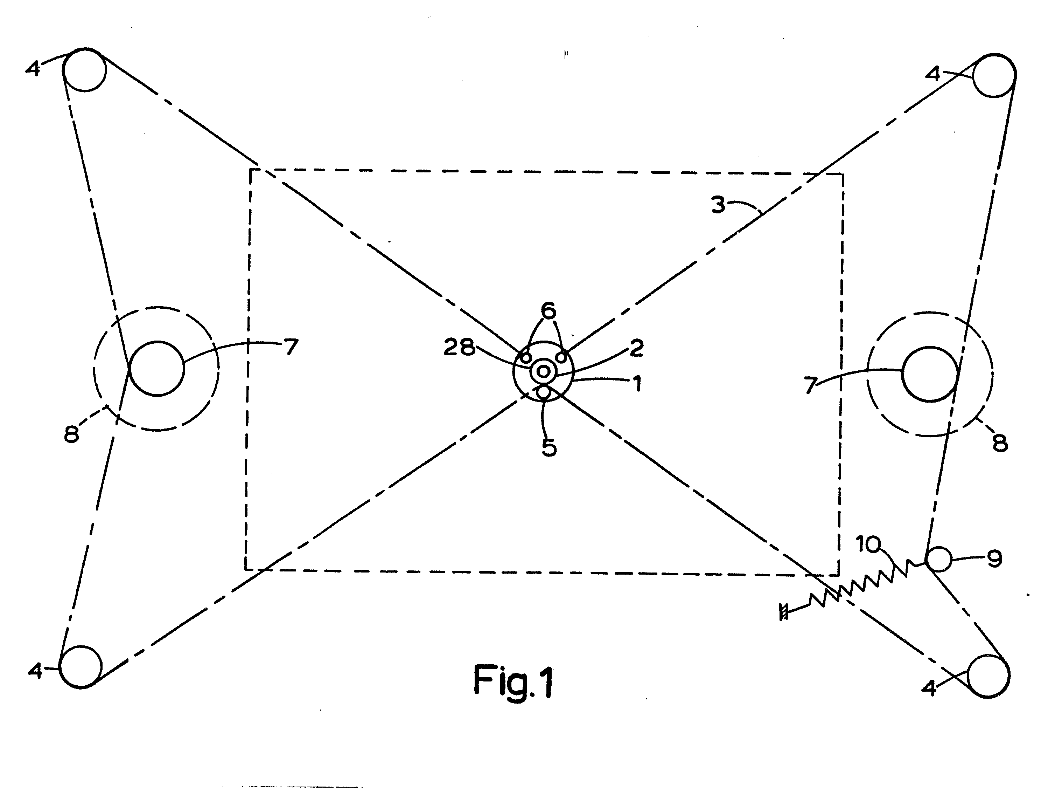

Figures 1, 2 and 3 respectively show a schematic plan view of an embodiment of the present invention.

In the embodiment of the invention illustrated in Figure 1, a plotting or recording apparatus comprises a penholder or carriage 1 which supports a pen system 2. The pen, not visible, of the pen system can bear on the writing area, defined by broken lines, of a record surface beneath the penholder or carriage. The carriage or holder 1 is supported on the writing surface by feet which are not visible in the drawing. These feet are preferably of PTFE (polytetrafluoroethylene). Alternatively, castor wheels can be used instead of feet. The penholder or carriage 1 is moved over the writing area of the record surface by a guide cable which may be a wire 3 having one or more strands. The guide cable is passed over pulleys 4 arranged at the corners of an imaginary rectangular area and over a fifth pulley 5 (which is a tensioning pulley) on the pen carriage or holder 1. The ends of the guide cable 3 are secured to the penholder or carriage at anchorages 6. The arrangement of pulleys and anchorages is such as to provide the guide cable 3 with a figure-eight configuration. The tensioning pulley 5 and the anchorages 6 are arranged at or near the point of intersection of the figure-eight. The two portions of the guide cable 3 running from the anchorages 6 are passed round drive scrolls 7. A drive scroll is a device for driving cables or the like in a non-slip manner. In such a device, a portion of a cable is passed through a drive cylinder or drum and fixed internally. The cable leaves the drum or cylinder near its opposite ends, the opposite portions of cable being wound round the drum or cylinder in opposite directions, i.e the cable or one side of the internal fixing is wound in a clockwise direction and that on the other side is wound in an anti-clockwise direction. This permits equal lengths of cable to be taken up and released on each rotation of the cylinder or drum. These drive scrolls are rotated by electric stepper motors 8 controlled by impulses received from a computer. Thus, rotation of the scrolls moves the guide cable round the various pulleys and this varies the lengths of the cable portion running from the respective anchorages and moves the penholder or carriage 1 over the writing area. As the penholder or carriage 1 moves within the writing area the total length of the wire in the sytem varies by a small amount. A tensioning pulley 9 loaded by a spring 10 is therefore provided to prevent the figure-eight wire configuration becoming slack.

The stepper motors 8 are driven separately by means of the impulses received from the computer. In this manner it is possible to move the penholder or carriage to any position within the writing area. However, since the system is inherently non-linear, certain corrections need to be applied to the co-ordinates in order that linear plots may be produced. The distortion follows a predictable law which can be calculated and the distortion can therefore be removed with the aid of a micro-processor which may be included in the system or may be separate from it.

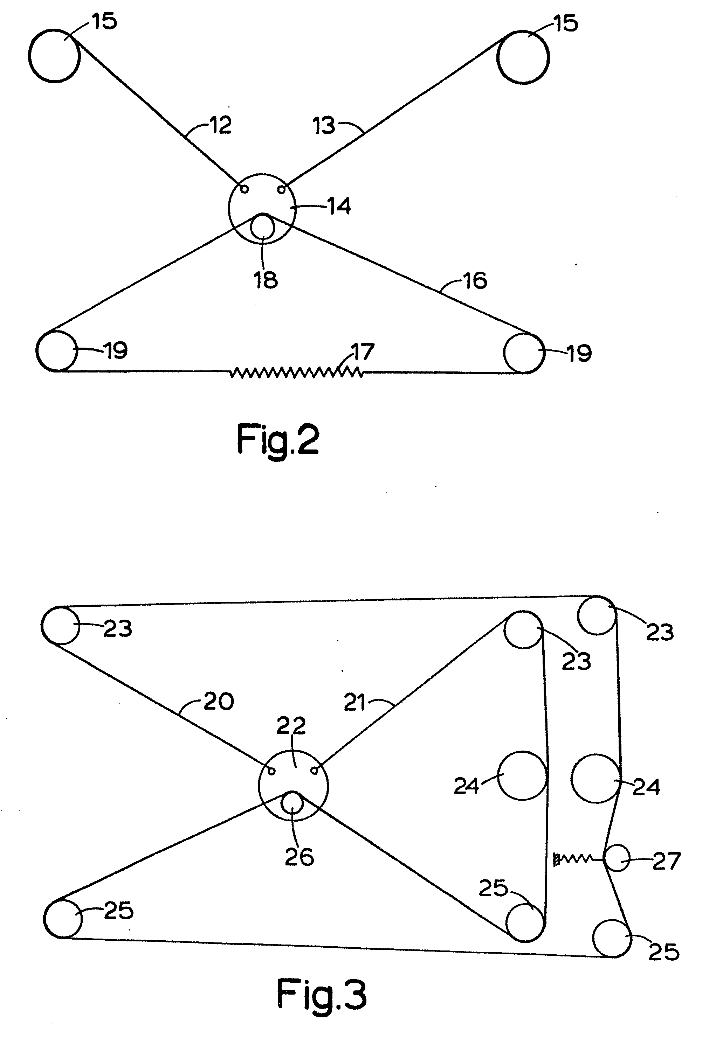

Alternative arrangements are illustrated in Figures 2 and 3. Thus, in Figure 2, two separate cable portions 12, 13 are each anchored at one end to a penholder or carriage 14, the other ends of these portions being connected to drive scrolls 15 driven by motors (not shown). As will be seen in the drawing, the scrolls 15 are so located that the cable portions 12, 13 follow divergent paths from the penholder or carriage 14. Another cable portion forms a tensioning loop 16 including a tension spring 17 which loop is passed round a pulley 18 on the penholder or carriage 14 and further pulleys 19. In the Figure 3 arrangement, cable portions 20, 21 are anchored to a penholder 22 and passed round pulleys 23 to drive scrolls 24 driven by electric motor (not shown). The cable is passed from these drive scrolls round further pulleys 25 and a pulley 26 on the penholder or carriage to form a figure-eight configuration with an additional tensioning loop maintained under tension by a tensioning spring and pulley 27.

If desired, means may be provided to raise or lower the pen of the pen system into and out of contact with the record surface. In a preferred embodiment, the pen is raised or lowered by an electric solenoid 28 (Figure 1) supplied with energy through the guide cable or cables.

In a modification the cable portions are positioned on the reverse side or back of the record surface and move a magnetic pad behind the record surface. A pen made of or incorporating magnetic material is held in contact with the front of the record surface by magentic attraction and will follow movement of the magnet produced by the cable portions. This arrangement permits the writing area of the record surface to be kept completely free of drive cables.

0074190

- 5 -

CLAIMS:

1. A recording or plotting apparatus comprising a penholder or carriage supporting a pen which is movable on a record surface; two portions of cable connected to the penholder or carriage; driving means for varying the lengths of cable portions thereby to move the penholder or carriage on the record surface; and means for maintaining the cable portions under tension.

2. An apparatus as claimed in claim 1 wherein the cable portions are portions of a guide wire passed around pulleys so disposed with respect to one another that the guide wire has a figure-eight configuration, the penholder or carriage being disposed at or near the point of intersection of the figure-eight, one of the said pulleys being located on the penholder or carriage and the free ends of the guide wire being anchored to the penholder or carriage and tensioning means bearing on a portion of the guide wire between two pulleys.

3. An apparatus as claimed in claim 2 wherein the guide wire is driven to move round the pulleys by drive scrolls.

4. An apparatus as claimed in claim 1, wherein two separate cable portions are each connected at one end to the penholder or carriage and are each connected at the other end to a drive scroll, the drive scrolls being so disposed that the paths of the cable portions diverge from the penholder or carriage, another cable portion being passed round a pulley disposed on the penholder or carriage and two other pulleys spaced therefrom, the ends of the said other cable portions being connected to a tensioning device arranged between the two pulleys.

5.    An apparatus as claimed in claim 1 wherein the two ends of a cable are anchored to the penholder or carriage and the cable is passed round a plurality of pulleys one of which is located on the penholder or carriage, the other pulleys being so disposed with respect to one another that a portion of the cable follows a figure-eight configuration and another portion of the cable forms a tensioning device, tensioning means being provided to maintain the tensioning loop under tension.

6.    An apparatus as claimed in any one of the preceding claims wherein the penholder or carriage is provided with an electric solenoid operable to raise or lower the pen from and to the record surface, at least one of the cable portions being arranged to convey electricity to the solenoid.

Fig.1

0074190

2/2

0074190

Fig.2

Fig.3